# EUROPÄISCHE PATENTANMELDUNG

(11) **EP 4 793 523 A1**
(43) Veröffentlichungstag der Anmeldung: **19.08.2026**
(21) Anmeldenummer: 25157694.8
(22) Anmeldetag: 13.02.2025
(51) Int. Cl.: F16H 57/04

(54) **VERFAHREN ZU ANSTEUERUNG EINES ELEKTROLÜFTERS EINES GETRIEBES**

(71) Anmelder: Flender GmbH, 46395 Bocholt (DE); Flender Industriegetriebe GmbH, 09322 Penig (DE)
(72) Erfinder: DINTER, Ralf Martin, 46395 Bocholt (DE)
(74) Vertreter: Michalski Hüttermann & Partner mbB

(57) **Zusammenfassung**

Verfahren zur Steuerung einer mit zumindest einem Elektrolüfter 28 versehenen Getriebekühleinrichtung 26 für ein Getriebe 14, bei dem über einen Betrieb des Elektrolüfters 28 zumindest einer von mehreren auf einer Öltemperatur T eines Ölvolumens in dem Getriebe 14 basierenden Betriebsmodi angefahren wird, wobei über einen ersten Betriebsmodus ein Wirkungsgrad des Getriebes 14, über einen zweiten Betriebsmodus eine Öllebensdauer und über zumindest einen weiteren Betriebsmodus ein Einregeln einer Temperatur des Ölvolumens optimiert wird. Es soll eine Steuerung für die Elektrolüfter bereitgestellt, die den Betrieb eines Elektrolüfters abhängig von der Öltemperatur regelt.

## Beschreibung

Die Erfindung betrifft ein Verfahren zur Steuerung einer mit zumindest einem Elektrolüfter versehenen Getriebekühleinrichtung für ein Getriebe, bei dem abhängig von der Öltemperatur eines Ölvolumens der Elektrolüfter ein- oder ausgeschaltet wird.

Es sind Industriegetriebe mit Elektrolüfter bekannt, die über Konvektion am Gehäuse ein enthaltenes Ölvolumen kühlen, um eine bestimmte Öltemperatur oder die Öltemperatur in einem Temperaturbereich zu halten. Alternativ kann das Getriebe mit einem Öl-Luftkühler mit Ölumlaufpumpe ausgerüstet sein, der wiederum mit einem Elektrolüfter ausgerüstet sein kann. Zu nennen sind hier die EP 3 085 997 A1 oder die EP 3 482 106 B1.

Abhängig von festgelegten Schaltpunkten für den Elektrolüfter wird die Öltemperatur geregelt. Über die Öltemperatur wird lediglich indirekt der Wirkungsgrad des Getriebes und die Ölalterung beeinflusst. Bisher ist keine gezielte Beeinflussung des Wirkungsgrads oder der Ölalterung durch die Ansteuerung der Elektromotoren vorgesehen. Es besteht ein Bedürfnis Betriebsmodi anfahren zu können, die unmittelbar zumindest den Wirkungsgrad des Getriebes und die Öllebensdauer optimieren.

Es ist die Aufgabe der Erfindung Maßnahmen aufzuzeigen, die ein Optimieren zumindest des Wirkungsgrads des Getriebes und der Öllebensdauer ermöglichen.

Die Lösung der Aufgabe erfolgt durch ein Verfahren mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Verfahren zur Steuerung einer mit zumindest einem Elektrolüfter versehenen Getriebekühleinrichtung für ein Getriebe, bei dem über einen Betrieb des Elektrolüfters zumindest einer von mehreren auf einer Öltemperatur eines Ölvolumens in dem Getriebe basierenden Betriebsmodi angefahren wird, wobei über einen ersten Betriebsmodus ein Wirkungsgrad des Getriebes, über einen zweiten Betriebsmodus eine Öllebensdauer und über zumindest einen weiteren Betriebsmodus ein Einregeln einer Temperatur des Ölvolumens optimiert wird.

Das Getriebe umfasst ein Getriebegehäuse, in dem in einem unteren Gehäusebereich ein Ölvolumen aufgenommen ist. Der Füllstand des Ölvolumens kann bei einem bestimmungsgemäßen Gebrauch des Getriebes derart bemessen sein, dass die Verzahnungselemente zumindest zu einem kleinen Teil in das Ölvolumen eintauchen und Öl aufnehmen können. Oberhalb des Füllstandes des Ölvolumens können innerhalb des Getriebegehäuses Ölfangbleche vorgesehen sein, die abtropfendes oder verspritztes Öl auffangen können, um es an weitere zu ölende bzw. zu schmierende Bereiche weiterzuleiten, beispielsweise an Lagerstellen.

Die Getriebekühleinrichtung kann neben einem oder mehreren Elektrolüftern beispielsweise Kühlrippen zur Oberflächenvergrößerung umfassen. Zudem können Luftleitbleche vorgesehen sein, um den durch den zumindest einen Elektrolüfter erzeugten Kühlluftstrom zu leiten.

Zur Steuerung ist eine Steuerungs- und Regeleinheit vorgesehen, die zumindest einen Temperatursensor zur Erfassung einer Öltemperatur aufweist. Weiterhin ist die Steuerungs- und Regeleinheit signal- und steuerungstechnisch mit dem zumindest einen Elektrolüfter verbunden, um einen Betrieb des zumindest einen Elektrolüfters zu bewirken. In konkreter Ausgestaltung kann vorgesehen sein, dass der Betrieb des Elektrolüfters ein Einschalten, ein Ausschalten und ein Laufen mit variierenden Betriebsdrehzahlen umfasst.

In einer bevorzugten Verfahrensausgestaltung wird ein Zielwert T der Öltemperatur in Abgängigkeit des Betriebsmodus auf einen niedrigen Wert Tₘᵢₙ, einen hohen Wert Tₘₐₓ oder einen mittleren Wert Tₘᵢₜ gesetzt. Es wird folglich nicht mehr, wie bisher üblich, der Schaltpunkt des zumindest einen Elektromotors durch die maximal zulässige Öltemperatur festgelegt, sondern die Öltemperatur wird als Steuerungsparameter genutzt um unterschiedliche Betriebsmodi anfahren zu können.

In einer außerdem bevorzugten Verfahrensausgestaltung wird in einem ersten Betriebsmodus über einen hohen Wert Tₘₐₓ der Öltemperatur ein erhöhter Wirkungsgrad des Getriebes eingestellt.

In einer zudem bevorzugten Verfahrensausgestaltung werden in einem zweiten Betriebsmodus über einen Zeitverlauf niedrige Werte Tₘᵢₙ der Öltemperatur als Kollektiv aufgezeichnet und gegen eine die Wechselgrenze des Öls repräsentierende Wöhlerlinie ausgewertet, um eine hohe Öllebensdauer einzustellen.

In einer alternativen oder optionalen Verfahrensausgestaltung wird in einem weiteren Betriebsmodus während eines Anfahr- und/oder Beschleunigungsvorgangs des Getriebes ein Überschwingen des Wertes T der Öltemperatur über einen Zielwert Tₛₒₗₗ durch einen gegenüber dem zu erwartenden Zeitpunkt des Erreichens des Zielwertes Tₛₒₗₗ vorgezogenen Betrieb des Elektrolüfters zumindest begrenzt. Hierbei kann insbesondere vorgesehen sein, dass der vorgezogene Betrieb des Elektrolüfters mit variierenden Betriebsdrehzahlen durchgeführt wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Industrie-Applikation in Form eines Antriebsstrangs,
Fig. 2: einen schematischen Ablauf eines Verfahrens zur Steuerung eines Elektrolüfters und
Fig. 3 bis 5b): verschiedene Betriebsmodi zur Ansteuerung eines Elektrolüfters.

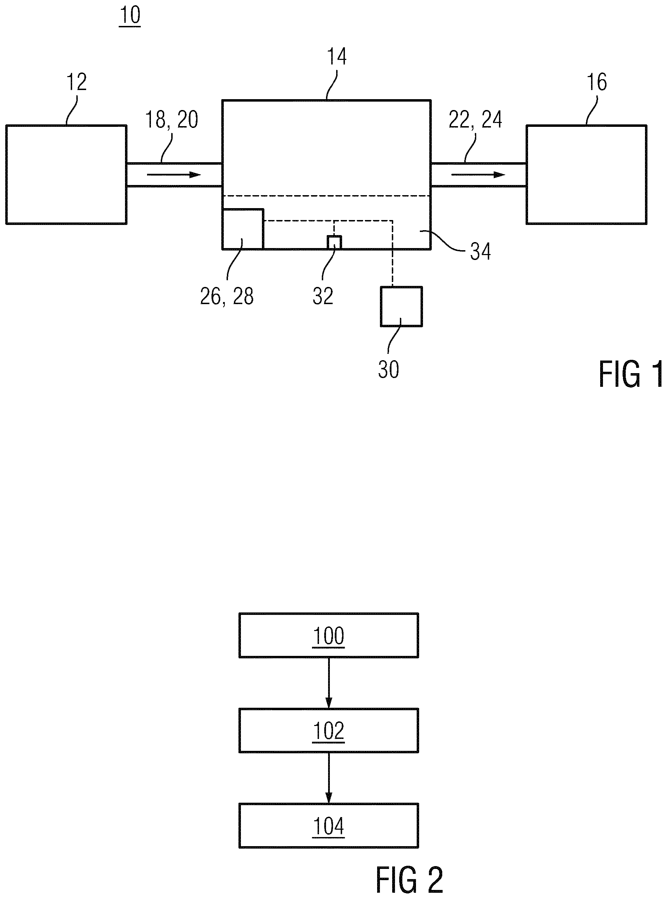

Die Figur 1 zeigt eine Industrie-Applikation 10 in Form eines Antriebsstrangs. Die Industrie-Applikation 10 umfasst ein Antriebsmittel 12, das beispielsweise als Elektromotor, als Verbrennungsmotor oder als Hydraulikmotor ausgebildet ist. Das Antriebsmittel 12 ist drehmomentübertragend mit einem Getriebe 14 gekoppelt, das wiederum mit einer mechanischen Anwendung 16 verbunden ist. Das Antriebsmittel 12 ist zum Abgeben einer Antriebsleistung 18 ausgebildet, die über eine Leistungswelle 20 dem Getriebe 14 zugeführt wird. Mit dem Bezugszeichen 26 ist eine Getriebekühlvorrichtung bezeichnet, die mindestens einen Elektrolüfter 28 umfasst. Es ist eine Steuerung- und Regelungseinheit 30 vorgesehen, die mit der Getriebekühlvorrichtung 26 und einem Temperatursensor 32 verbunden ist, der in dem Getriebe 14 in einem Ölvolumen 34 angeordnet ist. Durch das Getriebe 14 wird die eingehende Antriebsleistung 18, unter Berücksichtigung von Reibungsverlusten, bezüglich Drehzahl und Drehmoment gewandelt und als Ausgangsleistung 22 über eine Leistungswelle 24 an die mechanische Anwendung 16 weitergeleitet. Das Getriebe 14 kann beispielsweise als Koppelgetriebe, als Stirnradgetriebe, als Kegelstirnradgetriebe oder als Planetenradgetriebe ausführt sein.

Die Figur 2 zeigt schematisch einen Ablauf eines Verfahrens zur Steuerung einer mit zumindest einem Elektrolüfter 28 versehenen Getriebekühleinrichtung 26. In Verfahrensschritt 100 wird ein betriebsbereites Getriebe 14 mit einer Getriebekühleinrichtung 26 bereitgestellt. Das Getriebe 14 beinhaltet ein Ölvolumen 34. Die Getriebekühleinrichtung 26 umfasst zumindest einen Elektrolüfter 28, einen Temperaturfühler 32 und eine verbundene Steuerung- und Regelungseinheit 30. Die Steuerung- und Regelungseinheit 30 ist dazu eingerichtet, eine Öltemperatur T des Ölvolumen 34 beispielsweise in definierten Zeitintervallen zu erfassen. In Verfahrensschritt 102 erfolgt ein bestimmungsgemäßer Betrieb des Getriebes 14, das bspw. Teile einer Industrie-Applikation 10 sein kann, wie zu Figur 1 beschrieben. In Verfahrensschritt 104 wird über einen Betrieb des Elektrolüfters 28, gesteuert von der Steuerung- und Regelungseinheit 30, zumindest einer von mehreren auf einer Öltemperatur T eines Ölvolumens in dem Getriebe 14 basierenden Betriebsmodi angefahren.

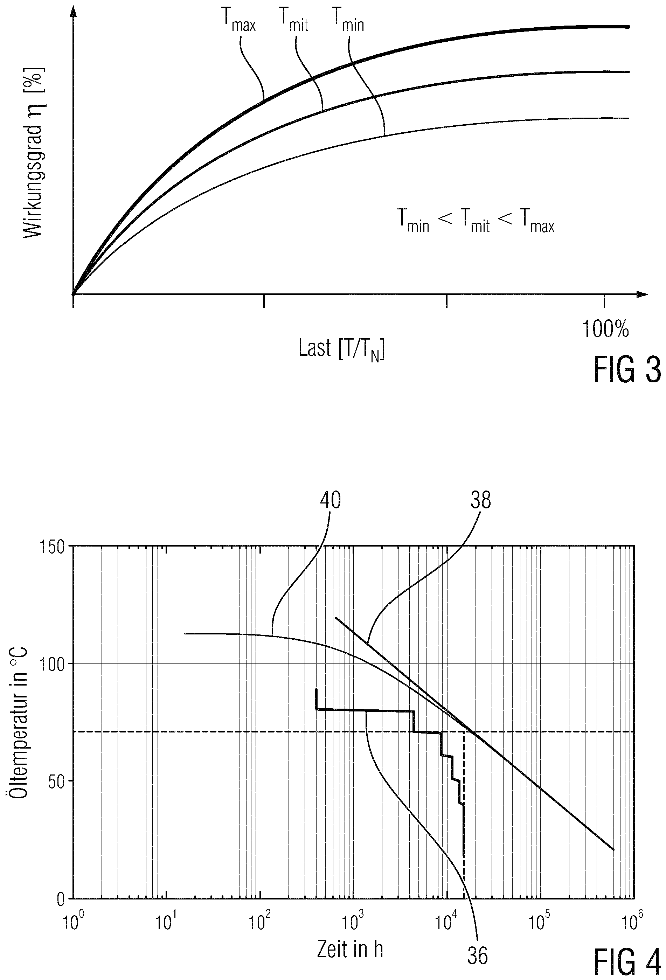

Anhand der Figur 3 wird einer der mehreren Betriebsmodi beschrieben. In der Figur 3 ist auf der x-Achse eine prozentuale Last als momentane Last bezogen auf eine Nennlast aufgetragen. Auf der y-Achse ist der Wirkungsgrad η aufgetragen. Es ist eine Kurvenschar eingetragen, die für drei verschiedene Öltemperaturen Tₘᵢₙ bis Tₘₐₓ die Abhängigkeit des Wirkungsgrad η von der prozentualen Last zeigt. Im Wesentlichen erhöht sich der Wirkungsgrad mit dem Sinken der Viskosität des Öles mit höheren Öltemperaturen. In diesem Betriebsmodus kann bspw. für die auftretenden prozentualen Lasten ein möglichst hoher Wirkungsgrad erzielt werden.

Anhand der Figur 4 wird ein weiterer Betriebsmodus beschrieben. In der Figur 4 ist auf der x-Achse ein Zeitraum aufgetragen, dessen Länge beispielsweise einem Wechselintervall eines Ölvolumens 34 in einem Getriebe 14 entspricht. Mit dem Bezugszeichen 36 ist eine als Kollektiv - bestehend aus einer Vielzahl aufgezeichneter Öltemperaturwerte - in dem betrachteten Zeitraum aufgezeichnete Temperaturbelastung bezeichnet. Mit dem Bezugszeichen 38 ist eine als Wöhlerlinie zu beschreibende Wechselgrenze für eine bestimmte Ölsorte, durch die das Ölvolumen 34 gebildet wird, bezeichnet.

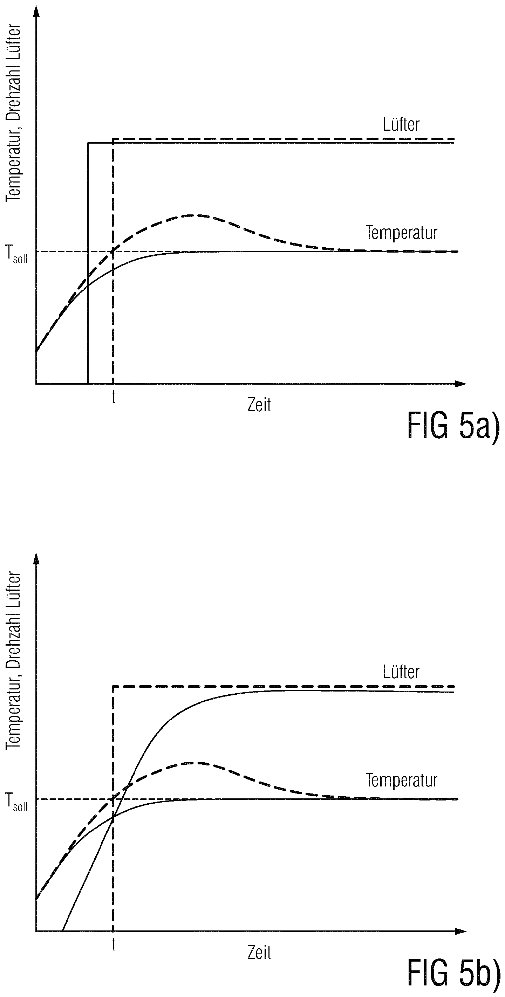

Anhand der Figur 5 wird ein weiterer Betriebsmodus beschrieben. In diesem Betriebsmodus erfolgt ein gezieltes Einregeln einer vorgegebenen Öltemperatur, bspw. mit einem KI-basierten Machine Learning (ML). Aus zahlreichen Messungen der Öltemperatur wird über einen selbstlernenden Algorithmus des ML eine Regelungsstrategie abgeleitet, um ein Überschwingen der Öltemperatur bei schnellem Anfahren des Antriebsstrangs 10 zu vermeiden. Dieses Überschwingen ist in den Figuren 5a) und 5b) anhand der jeweils gestrichelten Temperaturkurven gezeigt. Der entsprechende Betriebszustand des Elektrolüfters 28 ist in den Figuren 5a) und 5b) ebenfalls durch eine gestrichelte Linie abgebildet. Dieser Betriebszustand des Elektrolüfters 28 zeichnet sich dadurch aus, dass zu einem bestimmten Zeitpunkt t der Elektrolüfter 28 mit einer Drehzahl angesteuert, die beispielsweise eine maximal mögliche Drehzahl sein kann. In der Figur 5a) ist zur Vermeidung eines Überschwingens der Öltemperatur eine erste Möglichkeit der Ansteuerung des Elektrolüfters 28 dargestellt und zwar indem dieser, abgeleitet aus dem oben beschriebenen selbstlernenden Algorithmus des ML, zu einem früheren Zeitpunkt angesteuert wird. Die Ansteuerung des Elektrolüfters 28 erfolgt mit unveränderter Drehzahl gegenüber dem herkömmlichen Vorgehen. In der Figur 5b) ist zur Vermeidung eines Überschwingens der Öltemperatur eine weitere Möglichkeit der Ansteuerung des Elektrolüfters 28 dargestellt und zwar indem dieser, wiederum abgeleitet aus dem oben beschriebenen selbstlernenden Algorithmus des ML, zu einem noch früheren Zeitpunkt angesteuert wird, zusätzlich aber die Drehzahl derart gesteuert wird, dass sie über einen gewissen Zeitraum kontinuierlich auf die zu erreichende Drehzahl gesteigert wird. Durch beide Varianten der Ansteuerung, abgeleitet aus dem selbstlernenden Algorithmus des ML, kann eine Überschwingen der der Öltemperatur bei schnellem Anfahren des Antriebsstrangs 10 zu vermeiden oder zumindest weitestgehend reduziert werden.

### Bezugszeichenliste

- 10: Industrie-Applikation
- 12: Antriebsmittel
- 14: Getriebe
- 16: mechanische Anwendung
- 18: Antriebsleistung
- 20: Leistungswelle
- 22: Ausgangsleistung
- 24: Leistungswelle
- 26: Getriebekühlvorrichtung
- 28: Elektrolüfter
- 30: Steuerung- und Regelungseinheit
- 32: Temperatursensor
- 34: Ölvolumen
- 36: Lastkollektiv
- 38: Wöhlerlinie

## Patentansprüche

1. Verfahren zur Steuerung einer mit zumindest einem Elektrolüfter (28) versehenen Getriebekühleinrichtung (26) für ein Getriebe (14),
bei dem über einen Betrieb des Elektrolüfters (28) zumindest einer von mehreren auf einer Öltemperatur T eines Ölvolumens in dem Getriebe (14) basierenden Betriebsmodi angefahren wird, wobei über einen ersten Betriebsmodus ein Wirkungsgrad des Getriebes (14), über einen zweiten Betriebsmodus eine Öllebensdauer und über zumindest einen weiteren Betriebsmodus ein Einregeln einer Temperatur des Ölvolumens optimiert wird.

2. Verfahren nach Anspruch 1, **dadurch gekennzeichnet, dass** der Betrieb des Elektrolüfters (28) ein Einschalten, ein Ausschalten und variierende Betriebsdrehzahlen umfasst.

3. Verfahren nach Anspruch 1 oder 2, **dadurch gekennzeichnet, dass** ein Zielwert T der Öltemperatur in Abgängigkeit des Betriebsmodus auf einen niedrigen Wert Tₘᵢₙ, einen hohen Wert Tₘₐₓ oder einen mittleren Wert Tₘit gesetzt wird.

4. Verfahren nach einem der Ansprüche 1 bis 3, **dadurch gekennzeichnet, dass** in einem ersten Betriebsmodus über einen hohen Wert Tₘₐₓ der Öltemperatur ein erhöhter Wirkungsgrad des Getriebes (14) eingestellt wird.

5. Verfahren nach einem der Ansprüche 1 bis 4, **dadurch gekennzeichnet, dass** in einem zweiten Betriebsmodus über einen Zeitverlauf niedrige Werte Tₘᵢₙ der Öltemperatur als Kollektiv aufgezeichnet werden und gegen eine die Wechselintervallgrenze des Öls repräsentierende Wöhlerlinie ausgewertet werden, um eine hohe Öllebensdauer einzustellen.

6. Verfahren nach einem der Ansprüche 1 bis 3, **dadurch gekennzeichnet, dass** in einem weiteren Betriebsmodus während eines Anfahr- und/oder Beschleunigungsvorgangs des Getriebes (14) ein Überschwingen des Wertes T der Öltemperatur über einen Zielwert Tₛₒₗₗ durch einen gegenüber dem zu erwartenden Zeitpunkt des Erreichens des Zielwertes Tₛₒₗₗ vorgezogenen Betrieb des Elektrolüfters (28) zumindest begrenzt wird.

7. Verfahren nach Anspruch 6, **dadurch gekennzeichnet, dass** der vorgezogene Betrieb des Elektrolüfters (28) mit variierender Betriebsdrehzahlen durchgeführt wird.
